# EUROPEAN PATENT APPLICATION

(11) **EP 2 623 892 A2**
(43) Date of publication of application: **07.08.2013**
(21) Application number: 13157311.5
(22) Date of filing: 22.10.2007
(51) Int. Cl.: F25B 9/14

(54) **Controlled rate freezing**

(30) Priority: 21.10.2006 GB 0620977; 01.03.2007 GB 0703954
(62) Divisional of application: 07824277.3
(71) Applicant: ACTON, Elizabeth, Cambridge GB3 0DF (GB); MORRIS, George John, Bourn, Cambridge CB3 7SX (GB)
(72) Inventor: ACTON, Elizabeth, Cambridge GB3 0DF (GB); MORRIS, George John, Bourn, Cambridge CB3 7SX (GB)
(74) Representative: MacDonald, Christopher Donald

(57) **Abstract**

The present invention relates to apparatus and a method for controlling the rate of freezing of biological material. The invention provides apparatus (200) comprising a Stirling engine having a cold end (201) associated therewith; an element (206) for receiving biological material, wherein said element (206) is thermally connected to said cold end (201); means for sensing temperature; and a controller for operating the Stirling engine.

## Description

This invention relates to a method and apparatus for the controlled rate freezing of biological materials.

Cryopreservation is a widely used method for the long term maintenance of cells, tissues and other biological samples. At the temperature of liquid nitrogen (-196°C), the viability of biological material is independent of the period of storage and biological samples are genetically stable. Whilst it is usual to store biological material at the temperature of liquid nitrogen, accurate control of the rate of cooling from ambient temperature to -100 °C is essential for the recovery of many cell types upon thawing. In many cases, a complex temperature profile is required involving several different linear cooling ramps and holding temperatures and, in some cases, specific non-linear rates of cooling have been demonstrated to be beneficial to cell recovery. With many cell types, controlled nucleation of ice during the cooling process is highly beneficial. If ice nucleation during cooling is not controlled, then extensive supercooling may occur leading to a significant reduction in cell viability on thawing. In addition to biological cryopreservation, the control of the rate of freezing is necessary in other preparatory and analytical equipment, including the processing of samples by freeze drying, in analytical equipment such as conductivity analysis to determine glass transition temperatures, differential scanning calorimeters (DSC), differential thermal analysers (DTA), equipment for testing the performance of electrical components at low temperatures etc.

Conventional controlled rate cooling equipment employs liquid nitrogen as the means of achieving low temperatures, either by direct exposure of the sample to cold gas or, indirectly, by conduction from liquid nitrogen. While these freezers have the advantage of accurate and controlled cooling, their potential for use is restricted by disadvantages associated with liquid nitrogen:
1. The storage and transportation of liquid nitrogen requires specialised equipment.
2. There are dangers of cold burns and asphyxiation to the people handling liquid nitrogen.
3. It is possible that a freezer may run out of liquid nitrogen during a freezing run resulting in loss of the control of the rate of cooling.
4. While it is commonly assumed that liquid nitrogen is sterile, many studies have shown that liquid nitrogen is a potential source of contamination and samples which are directly exposed to liquid nitrogen during freezing are placed at risk upon thawing.
5. Liquid nitrogen freezers are generally unsuitable for use in sterile environment as the nitrogen gas which vents from the machines is not sterile. Laboratories which operate under sterile conditions, such as some facilities producing transgenic mouse embryos, should therefore avoid the use of liquid nitrogen freezers.
6. There are also a number of potential applications in veterinary science and conservation which require portable controlled rate cooling equipment; and this is difficult to achieve in a safe manner with liquid nitrogen based systems.

Also, whilst conventional cryopreservation is satisfactory for the routine storage of a wide variety of cell types and tissues, a number of problems exist:
1. Automation - current methods of cryopreservation are labour intensive and it is difficult to process large numbers of samples, as may be required in new technologies such as high throughput screening.
2. Difficult to apply to single cells - problems exist in retrieving cells, particularly small cells such as spermatozoa. Developments in IVF technology now mean that single sperm can be used in ICSI.
3. Inventory storage - Following controlled rate freezing there are no systems for the automatic inventory control and retrieval of cryopreserved materials, with manual recovery of samples being the norm. This is unsatisfactory and can lead to sample warming and loss of viability.
4. Some cells and tissues are difficult to cryopreserve using conventional cryopreservation methods.

It is an object of the present invention to provide a method and apparatus for the controlled rate freezing of biological samples whereby problems associated with conventional technologies are mitigated or overcome.

A first aspect of the present invention provides apparatus as recited in the appended dependent claim 1.

A second aspect of the present invention provides a method as recited in the appended independent method claim.

Further features of the present invention are provided as recited in the appended dependent claims.

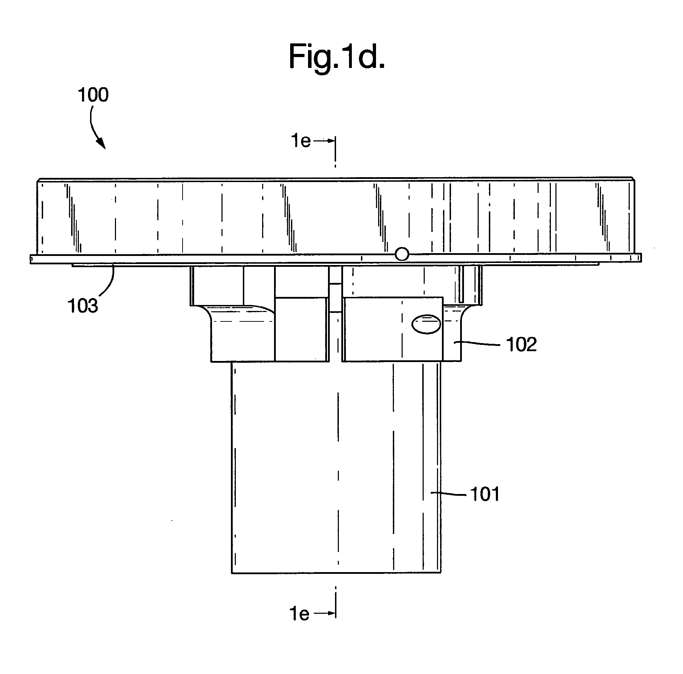

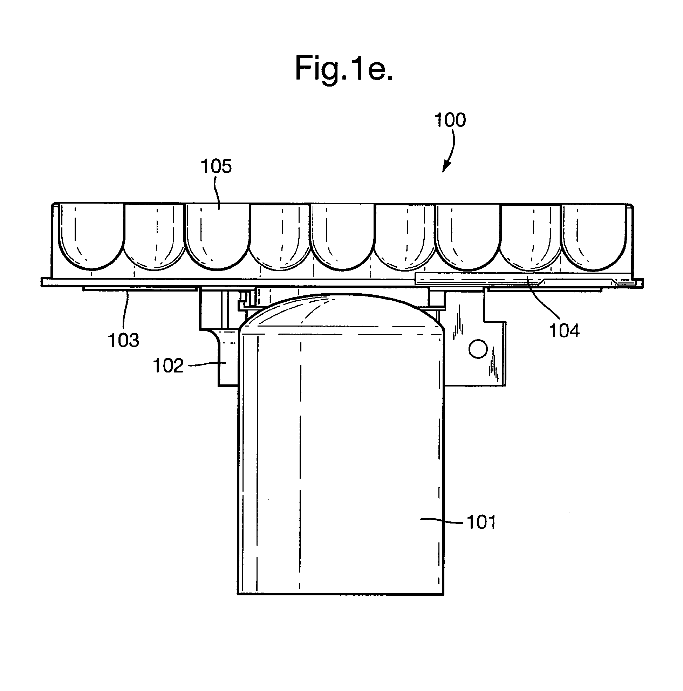

Embodiments of the present invention will now be described with reference to the accompanying drawings in which Figures la-b are views of a first embodiment, wherein Figure 1e is a cross-sectional view taken along line 1e in Figure 1d;
Figures 2a-d are views of a second embodiment of the present invention, wherein Figure 2d is an exploded view;
Figures 3a-c are views of a third embodiment of the present invention; and
Figures 4a-d are views of a fourth embodiment of the present invention, wherein the cover 407 is shown in phantom in Figures 4a-c.

We have demonstrated that the cold side of a Stirling engine may be employed as the cold source for a controlled rate freezing device which has the required accuracy of cooling together with a minimum temperature appropriate for the cryopreservation of biological systems.

Samples are placed in an appropriate sample plate and a temperature sensor (thermocouple, Pt resistance thermometer etc) embedded into the sample plate allows the sample temperature to be monitored. A voltage driving the Stirling engine is then adjusted to maintain the plate at the desired temperature. This is achieved by a simple feedback system. Alternatively, a temperature sensor may be placed into a sample to allow direct control of the sample temperature. An appropriate controller is used to generate the driver voltage to the Stirling engine in order to achieve good temperature control of the sample plate or the sample directly.

Sample plate geometry is designed to accommodate conventional samples (straws, ampoules, cryovials, bags, microtitre plates, matrix plates etc). The design of the plate is such that gradients at the top surface are minimised. Construction of the sample plate may be in the form of an inverted pyramid into which the cold end of the Stirling engine is inserted. Alternatively, a plate may be fixed to the cold end of the Stirling engine and the sample plate is then coupled to this fixed plate. To achieve good thermal contact, magnets may be embedded within the removable sample plate and the fixed plate. This allows the potential of interchanging sample plates for different sample geometries and the ability to sterilise sample plates. This is important, for example, when samples may be contaminated with the HIV or hepatitis virus. The sample plates are constructed from a metal which is good conductor, aluminium and silver for example. Also, non-metallic sample plates manufactured from, for example, machineable sapphire are also possible. In a preferred embodiment, slots or grooves may be cut into the sample plate to ensure good physical contact of the sample with the sample plate.

Accurate control of the temperature-time history (the cooling profile) is necessary to achieve successful cryopreservation. A Stirling engine cooler is likely to have a finite minimum amount of cooling that can be produced with a corresponding minimum allowable input voltage. In some circumstances, for example at the start of the freezing process or when the sample concerned is very small, this minimum heat extraction will be greater than that required by the process. In these circumstances, accurate control of the temperature of the sample plate is achieved by including a heater to provide a partially cancelling heat input. The heater may be provided under or within the sample plate. This heater is switched off when no longer required, for example when the sample plate attains a sufficiently low temperature. This configuration results in very accurate control of cooling rate and temperature within the samples and little sample to sample variation (< 1°C).

An alternative mode of temperature control may be achieved by having the Stirling Engine operating on full power and adjusting the sample temperature. For example, the temperature of the sample plate may be adjusted by adjusting the current to the heater embedded in the sample plate.

Non-linear cooling profiles may be achieved either by means of a series of closely spaced temperature steps (i.e. one or more step changes in temperature) by updating a set point of the controller every few seconds, or by a series of linear ramps.

Very slow rates of cooling are possible (< 0.01°C min⁻¹), which may be required for the cryopreservation of tissues or multicellular organisms. It is difficult and inconvenient to achieve this in conventional liquid nitrogen controlled rate freezers - and also requires a large source of liquid nitrogen which is not convenient and is costly.

Controlled nucleation of ice within the samples during controlled rate freezing is important in determining the viability on thawing. Manual nucleation of ice can be carried out as conventionally practised - by touching a supercooled sample with a cooled nucleating tool, with a small cryosurgical device or an ultrasonic source. In this respect, an ultrasonic toothbrush has been found to be effective. The sample plate configuration has the advantage that samples do not have to be removed from the equipment for nucleation, they remain in contact with the sample plate, thus avoiding any transient warming.

Alternatively, nucleation can be achieved in this device by placing ultrasonic transducers under the sample plate. These are activated when the sample is supercooled to induce ice nucleation. In this equipment, the temperature increase associated with ice nucleation and crystal growth is minimised. The warming of the samples is detected by the feedback control and the voltage to the Stirling engine is increased to compensate for this. Minimising the time that the samples are at the "Latent Heat Plateau" has been demonstrated to increase cell survival on thawing (for example see Thurston, L.M., Holt W.V. & Watson P.F. Theriogenology 60, 101-113 2003)

It is also possible that the sample chamber is sealed to achieve a controlled atmosphere above the samples (anoxic, nitrous oxide etc) and allow the atmosphere to be changed during freezing or thawing. Alternatively, a dry gas may be placed above the samples to minimise condensation of ice onto the samples and sample plate. In a further embodiment, the sample chamber may be connected to a means of reducing pressure, such as a vacuum pump. In this configuration, the equipment may be used as a freeze drier with which it is possible to:
1. Control the rate of cooling of samples.
2. Achieve controlled ice nucleation within samples - an important feature in controlling the rate of drying etc.
3. Accurately control the temperature of the sample plate to temperatures below -100 °C, if required.
4. Direct measurement of electrical power to the plate may be employed to detect and control the rate of sublimation of samples.

Within a sealed chamber, it is also possible to cool samples by forced convection. In this regard, fans are placed at the top of the chamber and the sample plate may be a finned heat transfer block. The air flow is designed to be uniform within the chamber, which ensures little sample to sample variation within the matrix block. This configuration is appropriate to the controlled rate freezing of samples such as cryotubes in a 12 x 8 matrix block (Matrix Technologies, Nunc) where there is little possibility for heat transfer by conduction. In this configuration, the heat transfer to the samples is determined both by the temperature of the heat transfer block and the velocity of the air past the samples. To achieve good temperature control, it may be appropriate to control the speed of the fans as well as the plate temperature.

Controlled thawing of samples may be achieved by placing frozen samples onto a sample plate cooled to a low temperature, and then controlling the temperature of the sample plate to achieve linear or non-linear warming rates. Alternatively, the temperature of the sample plate could be controlled such as to achieve a linear rate of warming in the sample.

This equipment has the significant advantage compared with liquid nitrogen cooled equipment in that it cannot run out of coolant during the freezing run or at the end of the freezing run. At the end of the freezing cycle, the equipment described herein will remain below -100°C until the machine is switched off. Another advantage is that the equipment can be operated through any UPS system and in this configuration it is not susceptible to interruptions to the power supply. The equipment is also fully portable and may be battery operated, for example from a 12V or 24V battery, via a regulated inverter.

For many applications, it is essential that the sample plate is cleaned in an efficient manner between freezing runs - this will minimise and sample to sample cross contamination. The sample plate has a raised design to be easily and efficiently cleaned. When grooves are cut into the sample plate, these are extended to the edges of the plate avoiding dirt traps.

The device may be used for the cryopreservation of biological materials in conventional containers (straws, ampoules, cryo vials, bags, microtitre plates, matrix tubes). The device would also be appropriate for freezing and thawing in microfluidics systems (MEMS, Nano systems etc). For some applications, microfuidic devices may be advantageous:
1. Automation, allowing the handling of a large number of samples is possible.
2. Single cells may be handled without danger of sample loss.
3. Addition of cryoprotective additives is possible within the MEMS device, as is any necessary cell handling.
4. Controlled cooling is achievable by contact with the sample plate.
5. Ice nucleation by any appropriate method (chemical, mechanical).
6. Sterility of the sample may be maintained during controlled freezing and also during storage.
7. Long term storage, inventory control, and sample retrieval may be automated.
8. Thawing and removal of additives is possible within the MEMS device.
9. Culture of cells post thaw and integration into other laboratory systems.

The cooling power of an individual Stirling engine is limited and if it is required to process a large number of samples, large volume samples or to have a large area on which to operate, two or more Stirling engines may be coupled to a sample plate. In this configuration, the Stirling engines are controlled to generate a uniform temperature across the plate.

In a further embodiment, a plurality of Stirling engines may be controlled independently so that a stable low temperature gradient is generated across the plate.

The equipment may also be used to analyse thermal events during cooling. Direct measurement of electrical power to the plate will detect freezing events in materials and may be applied to large samples, which cannot be examined by conventional DSC or DTA.

Several specific embodiments of the present invention are shown in the accompanying drawings.

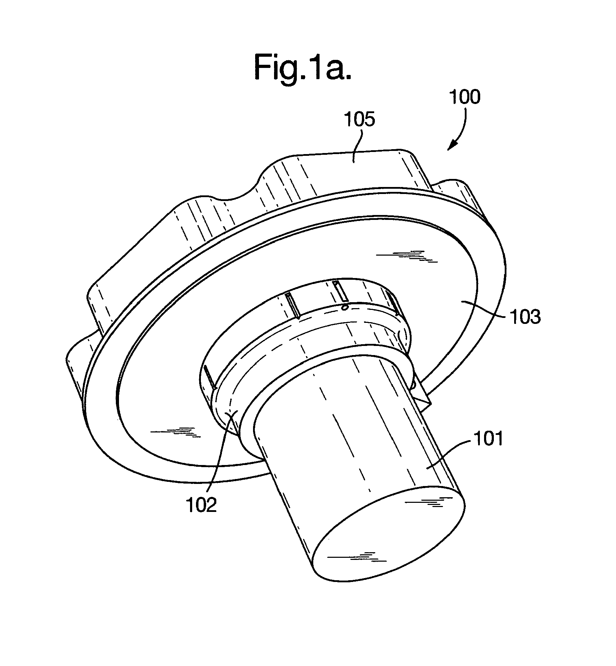

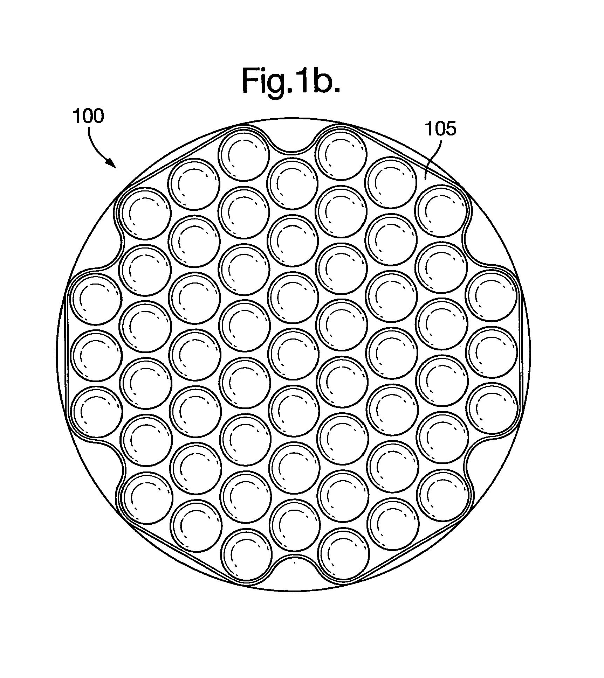

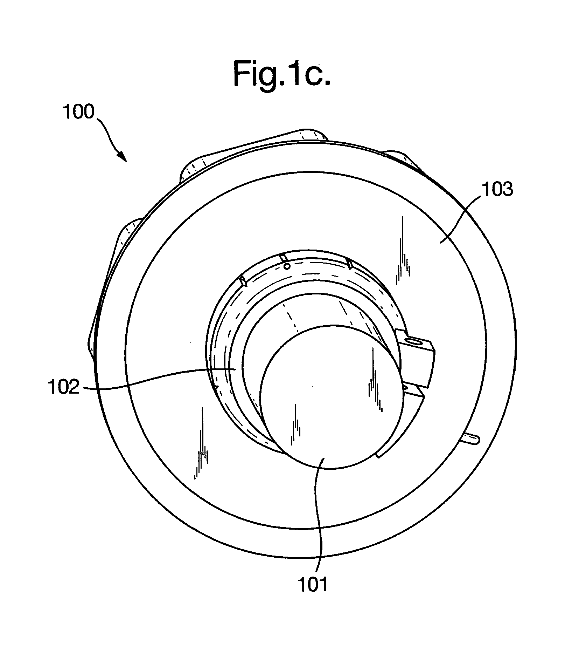

Firstly, an assembly 100 of a controlled rate freezer is shown in Figures 1. These Figures show the cold end 101 of a Stirling engine, a cold end clamp 102 for clamping about the Stirling engine, a heater 103, a position 104 for a temperature sensor, and a sample plate 105. In this configuration, the sample plate 105 is fixed and is machined to accommodate various cryovials in an upright position.

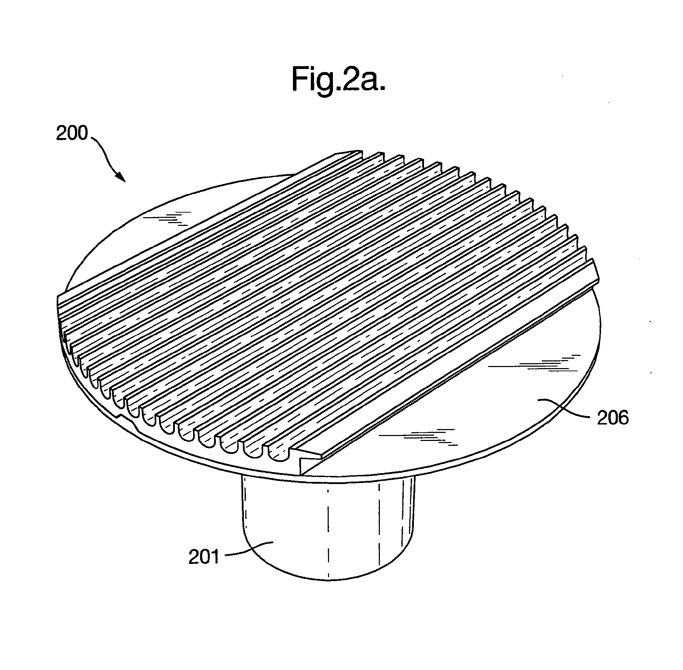

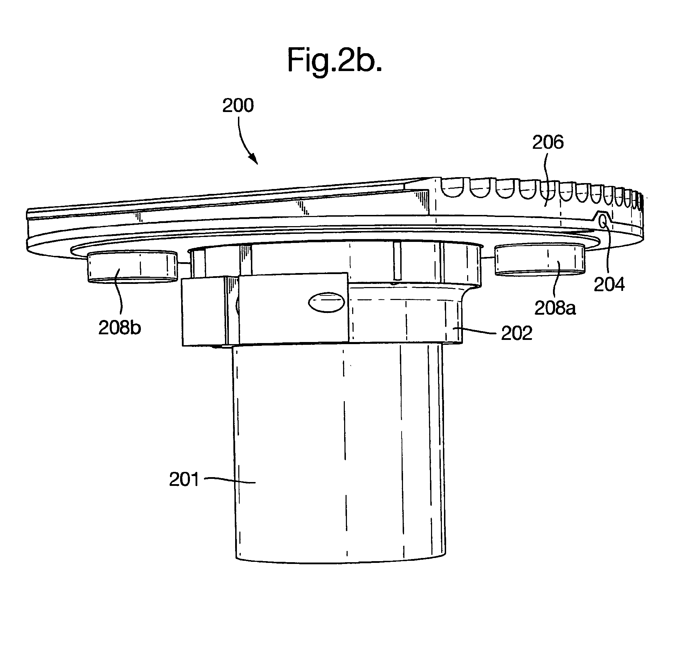

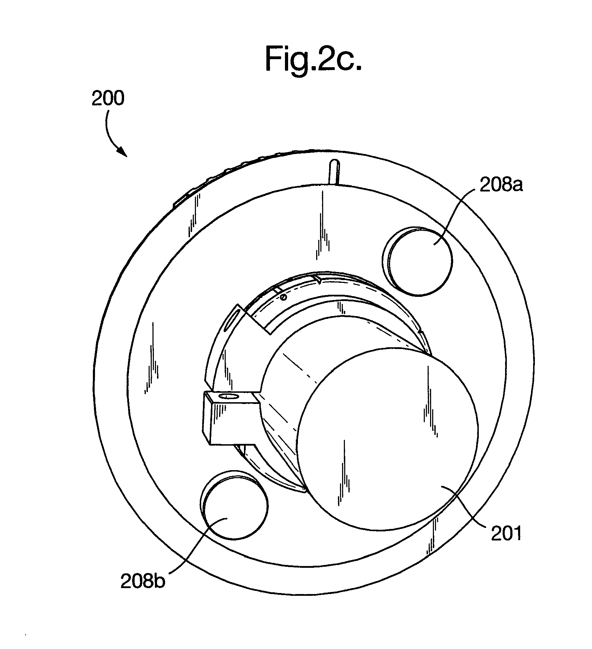

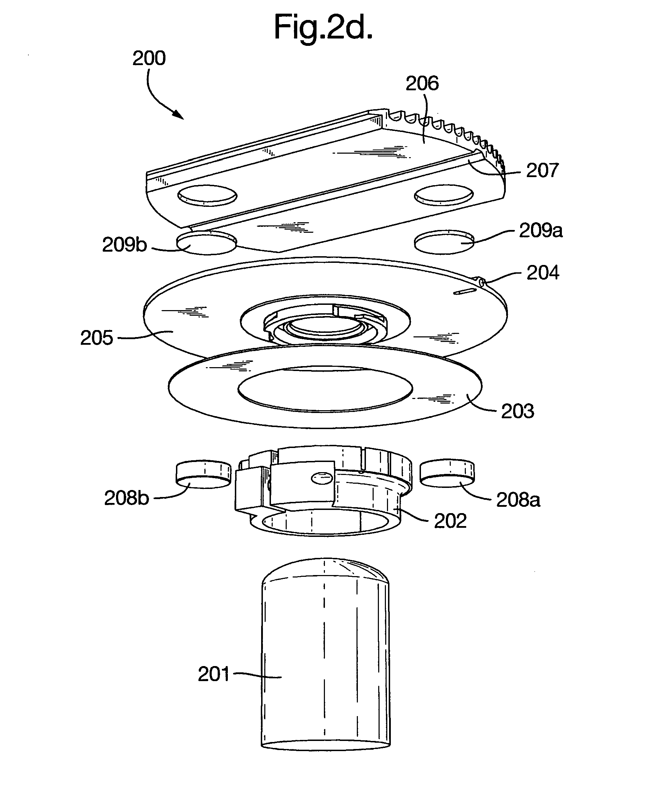

A second assembly 200 of a controlled rate freezer is shown in Figures 2. These Figures show the cold end 201 of a Stirling engine, a cold end clamp 202, a heater 203, a position 204 for a temperature sensor, a fixed sample plate 205 and a removable sample plate 206. The removable sample plate locates on the fixed sample plate via an orienting/locating groove 207 and is retained or locked into position with two magnets 208a, b under the fixed plate and two magnets 209a, b within the removable sample plate. In this configuration, the sample plate is machined to accommodate straws in a horizontal position.

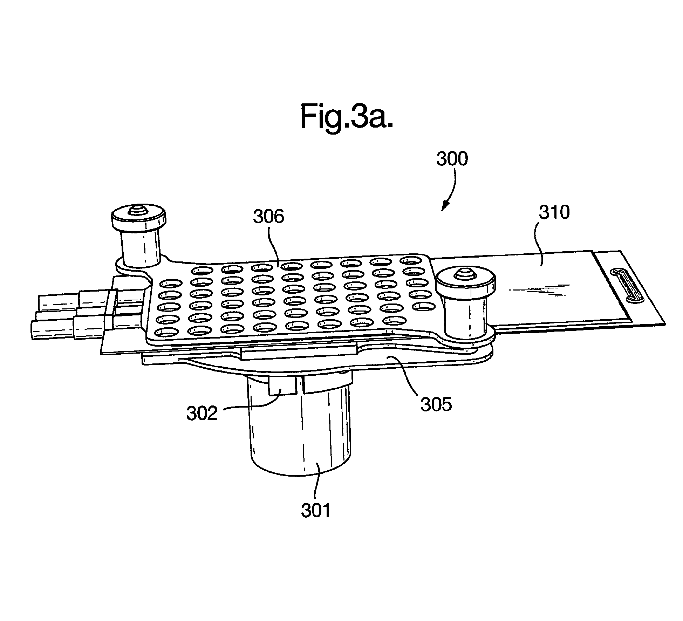

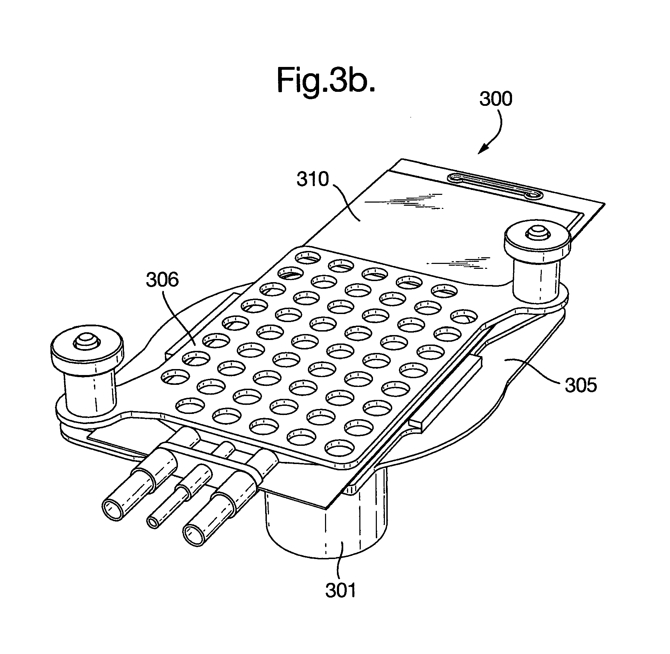

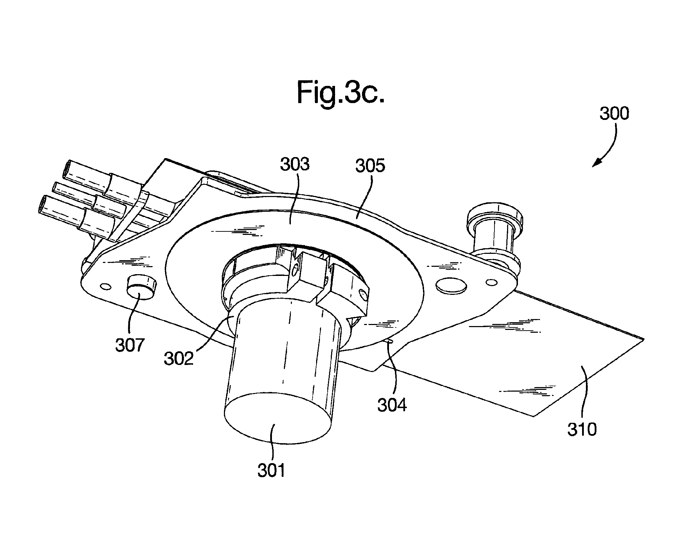

A third assembly 300 of a controlled rate freezer is shown in Figures 3. These Figures show the cold end 301 of a Stirling engine, a cold end clamp 302, a heater 303, a position 304 for a temperature sensor, a fixed sample plate 305 and a clamping plate 306, which is secured to the fixed plate by pairs of magnets 307 under the fixed plate. In this configuration, the fixed sample plate is machined to accommodate a bag 310 (fill volume 10-20 ml) in a horizontal position. The bag is maintained in good thermal contact by the clamping plate. This assembly 300 may also be employed to accommodate microtitre plates.

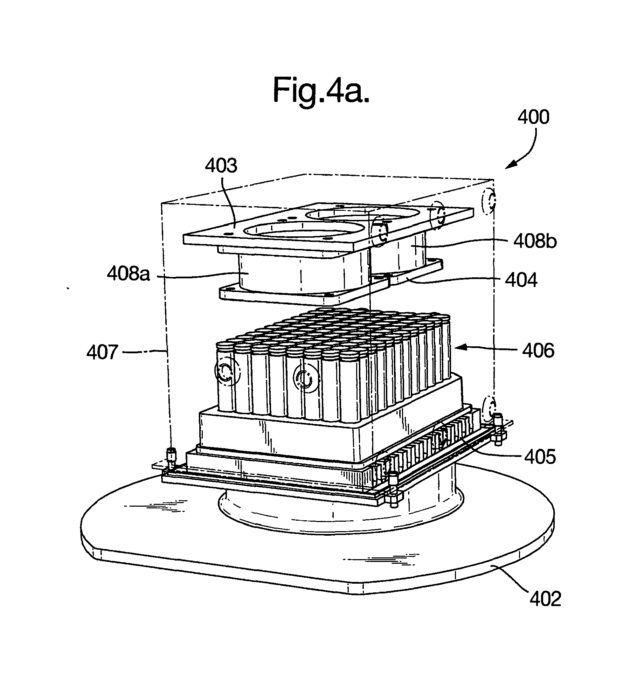

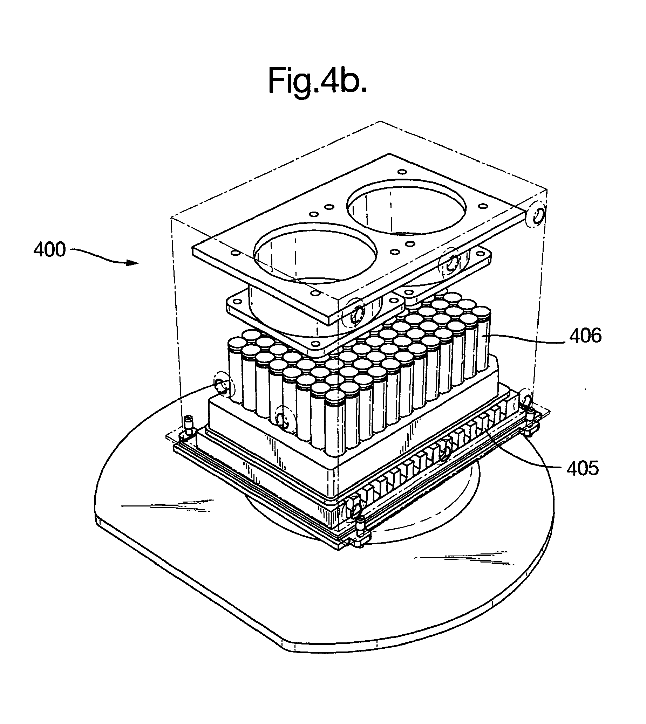

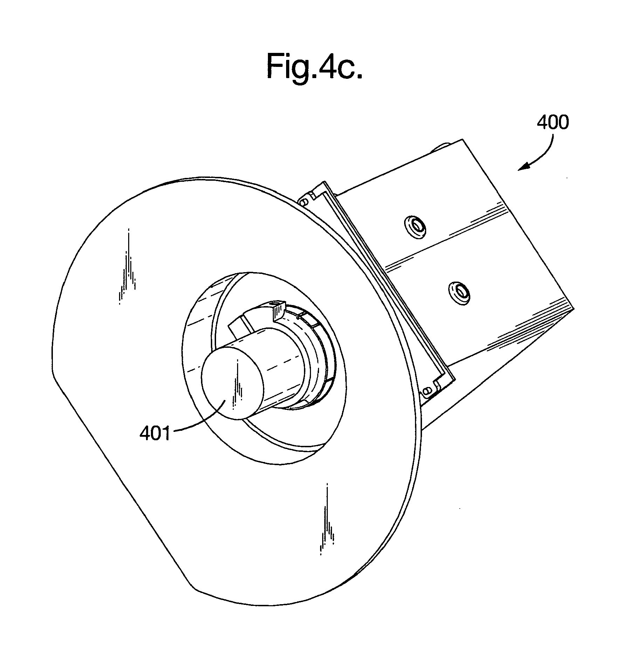

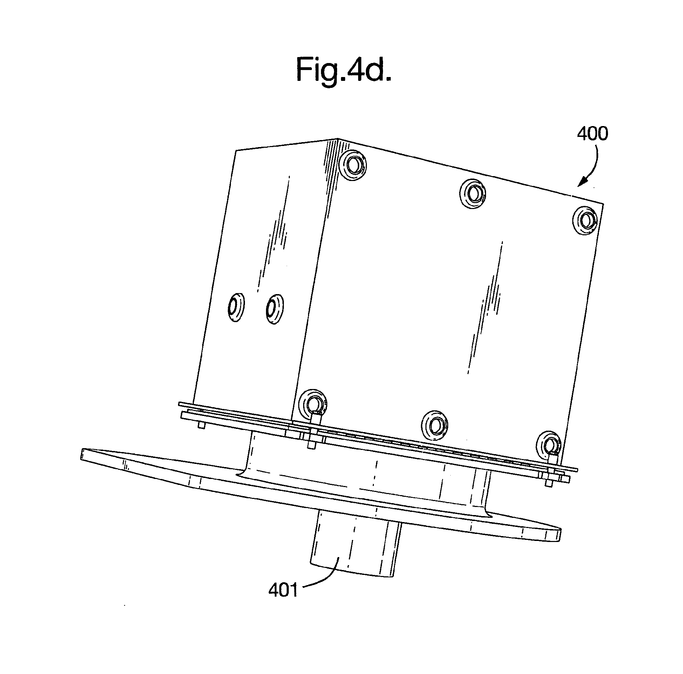

A fourth assembly 400 of a controlled rate freezer is shown in Figures 4. These Figures show the cold end 401 of a Stirling engine, an insulating plate 402, a heater 403, a position 404 for a temperature sensor, a finned heat transfer plate 405, a 12 x 8 matrix tube plate 406, a cover 407 containing two fans 408a, b and a fan drive mechanism (not shown). One fan may be provided, or more than two fans may be provided and used as required. In this configuration, samples are cooled by air passing over them.

Graph 1, below, shows Measured Cooling rates (temperatures monitored in the straws) during the standard human embryo cooling profile: (Lasalle P, Testart J, Renard JP 1985 Human embryo features that influence the success of cryopreservation with the use of 1,2, propanediol. Fertility and Sterility 44, 645-651).

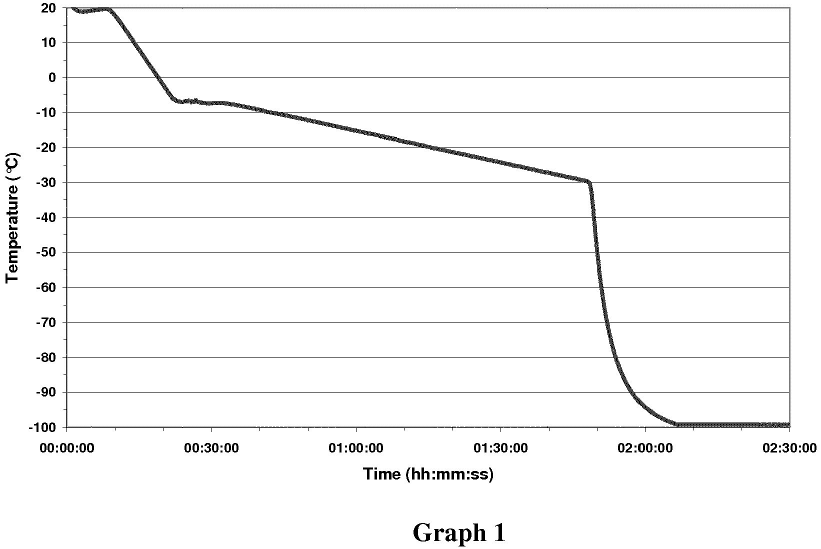

In order to achieve good temperature control at the various stages of the freezing process, apparatus according to the present invention is operated as follows:
Initial hold temp
Linear ramp at 2°C min⁻¹ to a holding temp of -7 °C
Stable hold at -7 °C
Slow rate of cooling (0.3°C min⁻¹) to -30 °C
Rapid cooling rate to -100 °C
Stable hold at -100 °C

### Differential thermal analysis (DTA)

In this application, a smooth aluminium sample plate was used, this achieves an even rate of cooling across the whole plate, to within ± 0.5°C. Data logging monitors the control temperature, the actual temperature within the sample plate, and the operating voltage to the Stirling cycle cooler. Direct measurement of electrical power to the plate was achieved by measuring the voltage supplied and current drawn by the Stirling engine component using a Tenma 72-6870 data-logging multimeter, connected to a PC via RS232. The logging interval was 1 second.

A slice of food (e.g. Mango) tissue (approx 1mm in thickness 150 mm 50 mm) was cut using a mandolin. These were weighed and placed on the sample plate, which was then cooled at a rate of 1°C min⁻¹. The sample was allowed to thaw and then refrozen.

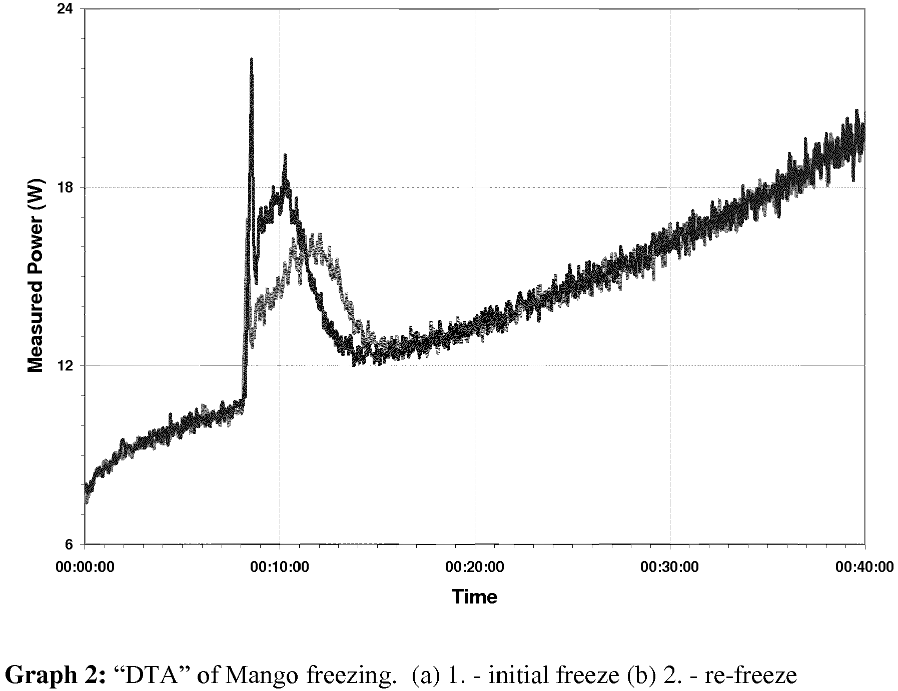

Apparatus for controlling the rate of freezing of biological material is described herein, the apparatus comprising a Stirling engine having a cold end associated therewith; an element for receiving biological material, wherein said element is thermally connected to said cold end; means for sensing temperature; and a controller for operating the Stirling engine.

The controller may operate the Stirling engine in response to output from the temperature sensing means so as to achieve a required change in the temperature of said element.

The apparatus may further comprising a heater, wherein said controller operates the heater in response to output from the temperature sensing means so as to achieve a required change in the temperature of said element. The heater may be integral with said element, for example embedded in said element.

The heater may be electrically operated and electrical power supplied to said heater may be directly measured so as to detect and allow the control of the rate of sublimation within biological material received by said element.

The change in temperature may be made in accordance with a predetermined profile of temperature rate of change. The change in temperature may be a linear change in the temperature of said element or may be a non-linear change in the temperature of said element. The change in temperature may be such as to achieve a non-linear rate of change in the temperature of biological material received by said element.

The element may be a plate for receiving a sample of biological material.

The cold end of the Stirling engine may be in abutment with said element.

The Stirling engine may be operated by means of an electric signal and said controller may change said signal in response to output from the temperature sensing means. Said signal may be generated by an electric driver voltage which is changed by said controller.

The Stirling engine may operate on a closed-cycle.

The Stirling engine may operate on a regenerative cycle.

The controller may be adapted to achieve a required change in temperature by operating the Stirling engine at maximum power and adjusting the heat output of the heater.

The element may be removable and interchangeable with a further element for receiving biological material and may be secured in position by magnetic means. Said magnetic means may comprise at least one magnet provided on said element and at least one magnet provided on said cold end of the Stirling engine.

The apparatus may further comprise one or more additional Stirling engines thermally coupled to said element. The controller may be adapted to control the plurality of Stirling engine so as to generate a uniform temperature across said element. The controller may independently operate said plurality of Stirling engines so that a stable temperature gradient is generated across said element.

The apparatus may further comprise one or more ultrasonic transducers acting on said element so as to control ice nucleation of biological material received on said element.

The controller of the apparatus, in association with temperature sensing means, may be adapted to detect temperature increases associated with ice nucleation and growth nucleation and to minimize ice nucleation and growth by increasing the power output of the or each Stirling engine. The controller may increase the power output of the or each Stirling engine by increasing the driver voltage associated with the or each Stirling engine.

The apparatus may comprise means for directly measuring electrical power to said element so as to detect phase changes within biological material received thereon.

The apparatus may further comprise a sealed sample chamber for allowing a controlled atmosphere. The pressure in the sample chamber may be controlled so as to freeze dry biological material received by said element.

One or more fans may cool biological material by means of convective air flow.

The apparatus may be portable and powered by a battery and is more preferably powered by a twelve volt or twenty four volt battery.

The apparatus may further comprise microfluidics systems.

A method of freezing a biological material is also described herein, comprising the step of placing a biological material adjacent said element of apparatus described above and operating the Stirling engine so as to reduce the temperature of said material.

The rate of freezing may be controlled by varying the heat output from said heater and/or by varying the output of the or each fan.

The Stirling engine may be operated at a constant power output.

## Claims

1. Apparatus for controlling the rate of freezing of biological material, the apparatus comprising a Stirling engine having a cold end (101) associated therewith; an element (105), such as a plate, for receiving biological material, wherein said element (105) is thermally connected to said cold end (101); means for sensing temperature; a controller for operating the Stirling engine; and **characterised by** directly measuring electrical power to said element (105) so as to detect phase changes within biological material received thereon.

2. Apparatus according to claim 1, wherein the controller operates the Stirling engine in response to output from the temperature sensing means so as to achieve a required change in the temperature of said element (105).

3. Apparatus according to claim 1 or 2, further comprising a heater (103), wherein said controller operates the heater (103) in response to output from the temperature sensing means so as to achieve a required change in the temperature of said element (105).

4. Apparatus according to claim 3, wherein said heater (103) is electrically operated and electrical power supplied to said heater (103) is directly measured so as to detect and allow the control of the rate of sublimation within biological material received by said element (105).

5. Apparatus according to any of the preceding claims, further comprising one or more ultrasonic transducers acting on said element (105) so as to control ice nucleation of biological material received on said element (105).

6. Apparatus according to any of the preceding claims, wherein said controller, in association with said temperature sensing means, is adapted to detect temperature increases associated with ice nucleation and growth nucleation and to minimize ice nucleation and growth by increasing the power output of the or each Stirling engine.

7. Apparatus according to claim 6, wherein the controller increases the power output of the or each Stirling engine by increasing the driver voltage associated with the or each Stirling engine.

8. Apparatus according to any of the preceding claims for use as a freeze drier, said apparatus further comprising a sample chamber and means of reducing pressure in the sample chamber.

9. Apparatus according to claim 8, wherein in which the pressure in the sample chamber is controlled so as to freeze dry biological material received by said element (105).

10. A method of freezing a biological material comprising the step of placing a biological material adjacent said element (105) of apparatus according to any of the preceding claims; and operating the Stirling engine so as to reduce the temperature of said material.

11. A method according to claim 10, wherein the direct measurement of electrical power to the element (105) is achieved by measuring the voltage supplied and current drawn by the Stirling engine.

12. Apparatus for controlling the rate of freezing of biological material, the apparatus comprising a Stirling engine having a cold end (101) associated therewith; an element (105), such as a plate, for receiving biological material, wherein said element (105) is thermally connected to said cold end (101); means for sensing temperature; a controller for operating the Stirling engine; and **characterised in that** the rate of freezing is controlled such that the element (105) undergoes a change in temperature in accordance with a predetermined profile of temperature rate of change.

13. Apparatus according to claim 12, wherein the change in temperature is a linear change in the temperature of said element (105).

14. Apparatus according to claim 12, wherein the change in temperature is a non-linear change in the temperature of said element (105).

15. Apparatus according to any of claims 12 to 14, wherein the change in temperature is such as to achieve a non-linear rate of change in the temperature of biological material received by said element (105).
